# EUROPEAN PATENT SPECIFICATION

(11) **EP 3 270 222 B1**
(45) Date of publication and mention of the grant of the patent: **18.12.2019**
(21) Application number: 17001163.9
(22) Date of filing: 07.07.2017
(51) Int. Cl.: G03B 17/56

(54) **SUPPORTING POLE FOR APPARATUSES**
STÜTZBALKEN FÜR VORRICHTUNGEN
POTEAU DE SUPPORT POUR APPAREILS

(30) Priority: 11.07.2016 IT 201600072260
(43) Date of publication of application: 17.01.2018
(73) Proprietor: Integra 360 S.r.l., 12010 Cervasca (CN) (IT)
(72) Inventor: Mandrile, Alberto, I-12010 Cervasca (CN) (IT)
(74) Representative: Garavelli, Paolo

(56) References cited:
- WO-A1-98/58420
- CA-A1- 2 488 852
- US-A1- 2004 070 985
- US-A1- 2008 272 252
- US-B1- 6 234 331

## Description

The present invention refers to a supporting pole for apparatuses; in particular, the poles of the present invention are modular poles, which can be certified according to European standards, which are designed to support different types of apparatuses, such as lamps, cameras, electronic flag-type signboards, traffic lights, telecommunication apparatuses, etc.

Poles of this type are not known in the art: in particular, there are no modular poles equipped with structural brackets for supporting the above apparatuses (see, for example, US-A1-2004/070985 or WO-A1-98/58420).

Object of the present invention is solving the above prior art problems, by providing a modular supporting pole which allows an efficient support and operation of several types of apparatuses.

The above and other objects and advantages of the invention, as will appear from the following description, are obtained with a supporting pole for apparatuses as claimed in claim 1. Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:

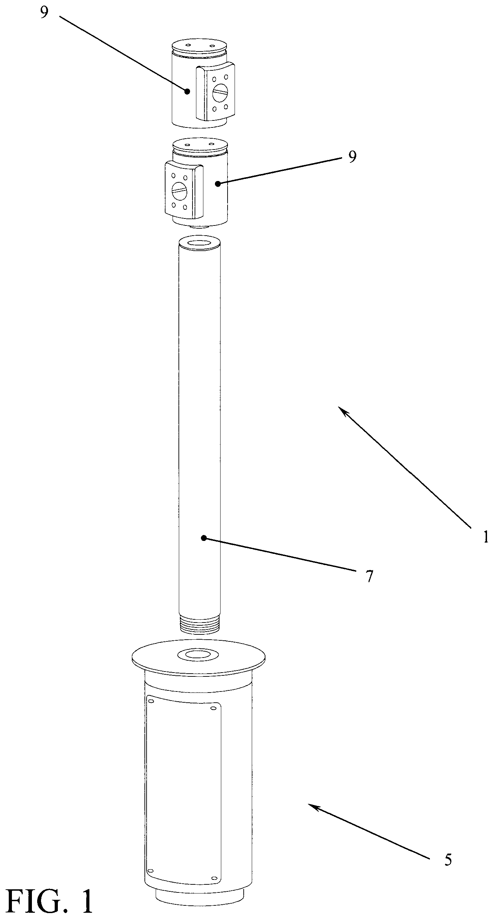

- Figure 1 is a perspective view of the main components of an embodiment of the pole according to the present invention;

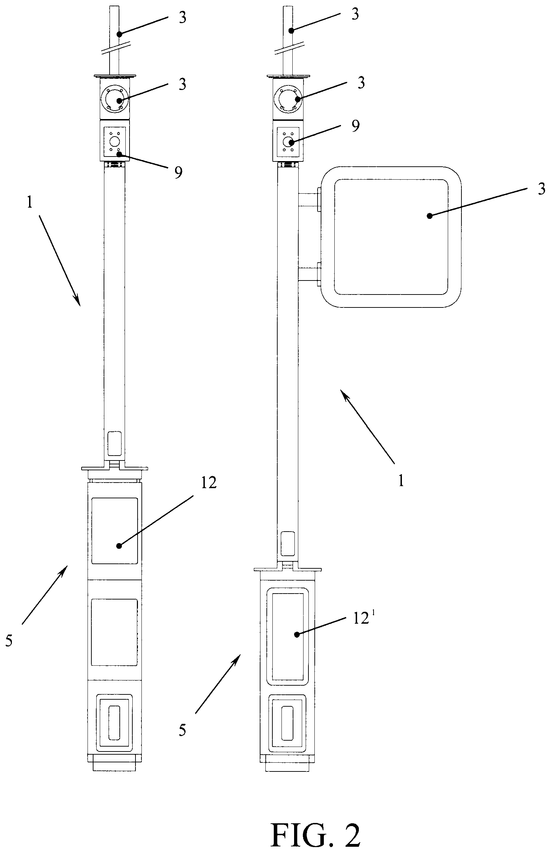

- Figure 2 is a schematic front view which shows some examples of composition of the pole of Figure 1;

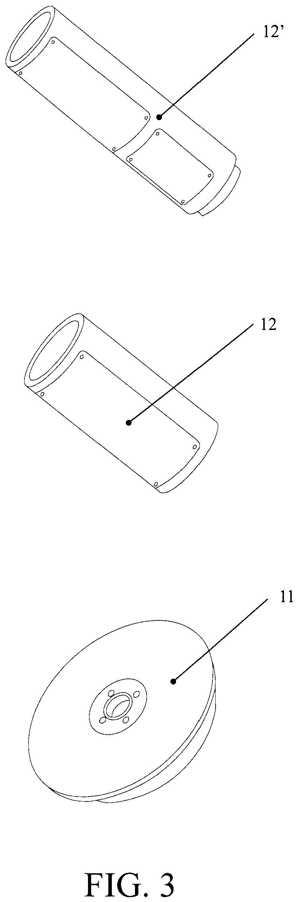

- Figure 3 is a perspective view of the main components of the base of the pole of the invention;

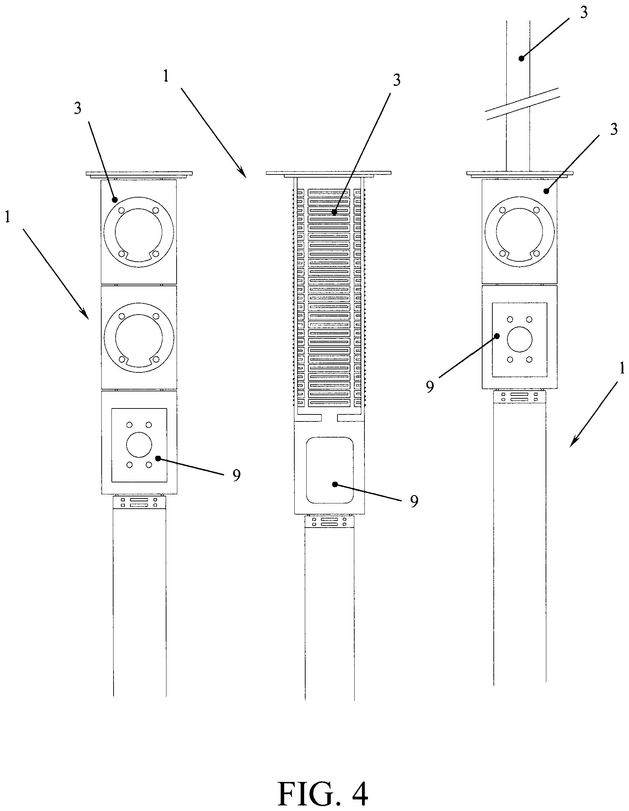

- Figure 4 is a schematic front view which shows examples of composition of the brackets of the pole of the present invention; and
- Figure 5 is a perspective view of a preferred bracket of the pole of the present invention.

With reference to the Figures, a preferred embodiment of the present invention is shown and described. It will be immediately obvious that numerous modifications and variations (for example related to shape, sizes, arrangements and parts with equivalent functionality) can be made to what is described, without departing from the scope of the invention as appears from the enclosed claims.

With reference to the Figures, the supporting pole 1 for apparatuses 3 (for example, but not limited to: cameras, radio bridges, lamps, sound diffusers, TV cameras, electronic flag-type signboards, traffic lights, telecommunication apparatuses, etc.) substantially comprises:
- at least one bearing base 5;
- at least one elongated cylindrical structure 7 placed above the bearing base 5; and
- at least one bracket 9 for fastening at least one respective apparatus 3, the bracket 9 being placed above the elongated cylindrical structure 7 at the opposite end with respect to the end to which the bearing base 5 is connected.

In particular, the bearing base 5 can be composed of a cover 1 adapted to be operatively connected to and support the elongated cylindrical structure 7, of an elongated cylindrical base element 12 and of one or more possible vertical elongation elements 12'.

Inside the bearing base 5, fastenings (not shown) are arranged for securing shelves and bottom plates (also not shown).

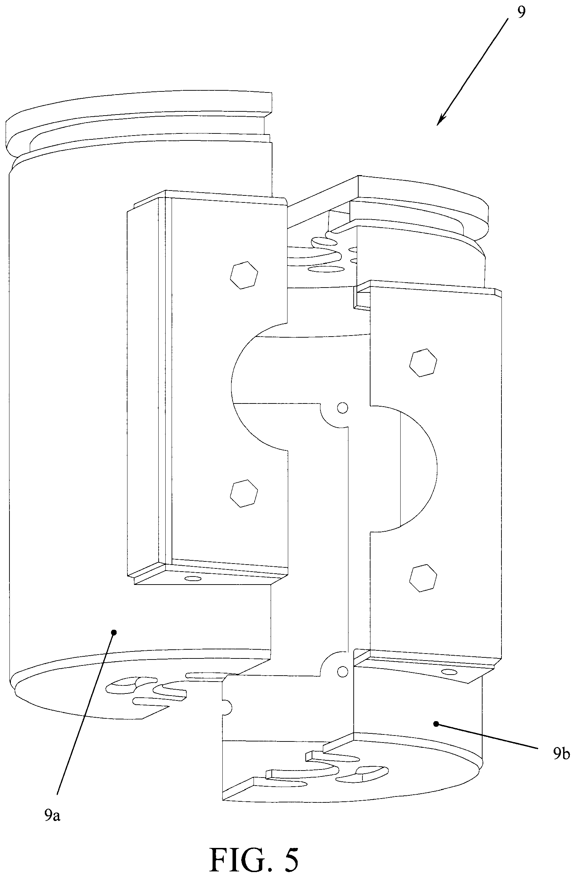

In order to increase its installation flexibility, the bracket 9 could be made of two symmetrical parts 9a, 9b capable of being mutually composed. Alternatively, due to the regulation on the fastening of the brackets 9 through suitable slots which can be seen in Figure 5, it is possible to perfectly orient the apparatuses 3 along the desired direction. Moreover, the flexural resistance is structurally guaranteed, which if hoes have to be made in situ, in order to pass cables inside, would imply the decay of the native certification of the pole 1 with a high risk of breakage.

The inventive bracket 9 is structurally built, and thereby allows creating an interruption on the pole 1 at the height at which it is necessary to fasten the apparatus 3; every listed apparatus 3 is certified (taking into account weight, overall sizes and side opening) and connected on the bracket 9, allowing to screw the apparatus 3 perfectly coupled with the bracket 9 without using drills or metallic, collar-type straps, completely removing problems due to operating freedom of installation personnel.

The poles 1 have no fixed sizes, but are composed according to the installer's needs, who, due to suitable coded and pre-established instructions, is guided to install with the several certified modular solutions of the pole 1.

Any fastening of the apparatuses 3 to the pole 1 is thereby performed; the bracket 9, preferably of a cylindrical shape and with a diameter equal to 152 mm for a height of about 250 mm, allows stopping the modular pole 1 without compromising the structure stability (computed and certified, allowing the fastening of any component), guaranteeing the installer (who otherwise would have no other way than drilling the pole and fastening the component with suitable brackets) to release a certification directly supplied by the manufacturer, freeing the end customer and himself from any controversy in case of accident.

The preferred construction of the pole 1 of the invention provides for a tubular element worked with 3D laser, turned with NC working center, sheet component cut with plane laser, MIG welding performed with semi-automatic positioning devices and NC bending.

The treatments to which the pole 1 of the invention has been subjected comprise satin finish of welding, performed on semi-automatic positioning devices, microsphere sanding, electrolytic zinc coating and powder painting with primer and enamel.

Every single component and composition of the pole 1 is provided with EC marking, with 1090 structural certification and painting guarantee equal to 300 hours in saline mist.

The poles 1, moreover, have a system (not shown) to house the technical room, which containes the necessary devices for the operation of the various apparatuses 3: such technical room is located in the base 5 of the pole 1 and is integrated therein, and not, as usual with known poles, in the top part of the pole or with junction rooms or boxes aside the pole.

Such technical room allows housing electronic, electric, electro-mechanical and mechanical apparatuses (non-limiting examples are: UPS, switches, batteries, power supplies, electric panels, mini-computers, modems, electric motors, digital communication modules, etc.).

Such technical room, whose sizes change according to the apparatuses which must be housed, is placed at the base 5 of the pole 1 (both in its underground part, and in the lower part near the bearing point on the ground) and is part of the structure of the pole 1 itself.

Due to the solutions adopted when designing the plants to be installed in the pole, it will be possible to perform class two installations, preventing accidental contacts and possible condensate drops created due to sudden thermal drops.

The technical room can further be equipped with a suitable natural venting system (not shown), which allows keeping the temperature constant inside the pole 1. The venting system prevents, in spite of the openings being present, water and snow from penetrating inside, providing a IP44 protection degree to the structure of the pole 1.

The pole 1 of the invention can further be equipped with a system (not shown) for connecting the various modules, which allows keeping the ground connection inside the pole 1 itself (equipotential ground system which guarantees the grounding of all components of the pole).

The various modules 5, 7, 9 of the poles 1 can further, preferably, be mutually connected through a joint (not shown).

The pole 1 of the invention thereby allows obtaining the following advantageous results:
- it is obtained from steel tubular elements alternating with shutters, which allow connecting the various elements;
- the design of the pole 1 has allows avoiding grounded electric panels, avoiding wires outside the pole, having the chance of orienting the possible cameras aesthetically and functionally, and supporting possible displays or lighted bodies.

## Claims

1. Supporting pole (1) for apparatuses (3) comprising:
- at least one bearing base (5);
- at least one elongated cylindrical structure (7) placed above the bearing base (5);
**characterized in that** it further comprises:
- a plurality of brackets (9) for fastening a respective apparatus (3) to a corresponding one bracket (9),
said apparatus being cameras, radio bridges, lamps, sound diffusers, TV cameras, electronic flag-type signboards, traffic lights or telecommunication apparatuses, each bracket (9) being placed above said elongated cylindrical structure (7) at an opposite end with respect to an end to which the bearing base (5) is connected, each bracket (9) being structurally built, in order to create an interruption on said pole (1) at a height at which each of said apparatuses (3) is fastened, each apparatus (3) being screwed onto the corresponding one bracket (9) in a perfect coupling, each of said brackets (9) being designed to orient the corresponding one apparatus (3) along a desired direction due to a regulation on the fastening of the bracket (9) through slots with which the bracket (9) is equipped;
- a technical room, which contains the necessary devices for an operation of the various apparatuses (3), said technical room being placed in the base (5) of the pole (1) and being integrated therein; and
- a system for connecting the various modules which allows keeping a ground connection inside the pole (1).

2. Supporting pole (1) according to claim 1, **characterized in that** said bearing base (5) is composed of a cover (11) adapted to be operatively connected to said elongated cylindrical structure (7), of an elongated cylindrical base element (12) and of one or more possible vertical extension elements (12').

3. Supporting pole (1) according to claim 1 or 2, **characterized in that** each bracket (9) is made of two symmetrical parts (9a, 9b) adapted to be mutually composed.

4. Supporting pole (1) according to claim 1, **characterized in that** said technical room contains electronic, electric, electro-mechanical and mechanical apparatuses, such as UPS, switches, batteries, power supplies, electric panels, mini-computers, modems, electric motors and digital communication modules.

5. Supporting pole (1) according to any one of claims 1 or 4, **characterized in that** said technical room is further equipped with a natural venting system, which allows keeping the temperature constant inside the pole (1), said venting system preventing, in spite of the openings being present, water and snow from penetrating inside the pole (1).

6. Supporting pole (1) according to any one of the previous claims, **characterized in that** various modules (5, 7, 9) are mutually connected through a joint.

## Patentansprüche

1. Stützpfeiler (1) für Geräte (3), der Folgendes enthält:
- mindestens eine Stützbasis (5);
- mindestens eine verlängerte zylinderförmige Stützstruktur (7), die über der genannten Stützbasis (5) angebracht ist;
und ist **dadurch gekennzeichnet, dass** er außerdem Folgendes enthält:
- mehrere Bügel (9) für die Befestigung eines entsprechenden Gerätes (3) an einem entsprechenden Bügel (9), die genannten Geräte sind Videokameras, Funkstationen, Lampen, Lautsprecher, Kameras, elektronische Fahnenschilder, Ampeln oder Telekommunikationsgeräte, jeder Bügel (9) ist auf der genannten verlängerten zylinderförmigen Struktur (7) an einem Ende gegenüber dem Ende angebracht, an dem die Stützstruktur (5) angeschlossen ist, jeder Bügel (9) ist strukturell konstruiert, um eine Unterbrechung am genannten Pfeiler (1) in einer Höhe zu erzeugen, in der jedes der genannten Geräte (3) befestigt wird, jedes Gerät (3) ist an einem entsprechenden Bügel (9) in einer perfekten Verbindung angeschraubt, jeder der genannten Bügel (9) wurde entwickelt, um das entsprechende Gerät (3) durch eine Einstellung an der Befestigung des Bügels (9) mit Ösen, mit denen der Bügel (9) ausgestattet ist, längs einer gewünschten Richtung zu orientieren;
- einen technischen Raum, der die notwendigen Vorrichtungen für den Betrieb der verschiedenen Geräte (3) enthält, der genannte technische Raum ist in der Basis (5) des Pfeilers (1) angebracht und in diesem integriert; und
- ein Verbindungssystem der verschiedenen Module, das die Erhaltung einer Erdverbindung intern im Pfeiler (1) ermöglicht.

2. Stützpfeiler (1) gemäß Patentanspruch 1, der **dadurch gekennzeichnet ist, dass** die genannte Stützbasis (5) aus einer Abdeckung (11) besteht, die dazu dient, sich für den Betrieb von einem verlängerten zylinderförmigen Basiselement (12) und von einem oder mehreren entsprechenden vertikalen Verlängerungselementen (12') mit der genannten verlängerten zylinderförmigen Struktur (7) zu verbinden.

3. Stützpfeiler (1) gemäß Patentanspruch 1 oder 2, der **dadurch gekennzeichnet ist, dass** jeder Bügel (9) aus zwei symmetrischen und miteinander zusammensetzbaren Teilen (9a, 9b) hergestellt wurde.

4. Stützpfeiler (1) gemäß Patentanspruch 1, der **dadurch gekennzeichnet ist, dass** der genannte technische Raum elektronische, elektrische, elektromechanische und mechanische Geräte wie USV, Batterien, Netzteile, Schalter, Schalttafeln, Minicomputer, Modem, Elektromotoren und digitale Kommunikationsmodule enthält.

5. Stützpfeiler (1) gemäß einem beliebigen der Patentansprüche 1 oder 4, der **dadurch gekennzeichnet ist, dass** der genannte technische Raum außerdem mit einem natürlichen Belüftungssystem ausgestattet ist, das es ermöglicht, die Temperatur intern im Pfeiler (1) konstant zu halten, das genannte Belüftungssystem ermöglicht es, trotz der vorhandenen Öffnungen das Eindringen von Wasser oder Schnee in den Pfeiler zu verhindern.

6. Stützpfeiler (1) gemäß einem der vorhandenen Patentansprüche, der **dadurch gekennzeichnet ist, dass** die verschiedenen Module (5, 7, 9) untereinander durch eine Kupplung verbunden sind.

## Revendications

1. Poteau de support (1) pour appareils (3) comprenant :
- au moins une base de soutien (5) ;
- au moins une structure cylindrique allongée (7) placée au-dessus de la base de soutien (5) ;
**caractérisé en ce qu'**il comprend aussi :
- une pluralité d'étriers (9) permettant de fixer un appareil relatif (3) à un étrier correspondant (9) ; les appareils peuvent être des caméras de surveillance, des ponts radio, des lampes, des diffuseurs sonores, des caméras photos, des enseignes électroniques en drapeau, des feux ou des appareils pour les télécommunications ; chaque étrier (9) est placé au-dessus de la structure cylindrique allongée (7) sur l'extrémité opposée par rapport à celle à laquelle est reliée la base de soutien (5) ; chaque étrier (9) est construit de manière structurelle dans le but de créer une interruption sur le poteau (1) à une hauteur où est ancré chaque appareil (3) ; chaque appareil (3) est vissé sur un étrier correspondant (9) avec un accouplement parfait ; chaque étrier (9) a été conçu pour orienter l'appareil relatif (3) le long d'une direction voulue grâce au réglage au niveau de l'ancrage de l'étrier (9) à l'aide de trous dont est doté l'étrier (9) ;
- un local technique qui contient les dispositifs nécessaires au fonctionnement des divers appareils (3) ; le local technique se trouve à la base (5) du poteau (1) dans lequel il est intégré ; et
- un système de connexion des différents modules qui assure le maintien d'une mise à la terre à l'intérieur du poteau (1).

2. Poteau de support (1), selon la revendication 1, **caractérisé en ce que** la base de soutien (5) est composée d'une couverture (11) apte à se connecter fonctionnellement à la structure cylindrique allongée (7), d'un élément de base cylindrique allongé (12) et d'un ou plusieurs éléments de rallonge verticale éventuels (12').

3. Poteau de support (1), selon la revendication 1 ou 2, **caractérisé en ce que** chaque étrier (9) est réalisé en deux parties (9a, 9b) symétriques et modulables entre elles.

4. Poteau de support (1), selon la revendication 1, **caractérisé en ce que** le local technique contient des appareils électroniques, électriques, électromécaniques et mécaniques, tels que des onduleurs (UPS), des batteries, des alimentateurs, des commutateurs, des tableaux électriques, des mini-ordinateurs, des modems, des moteurs électriques et des modules de communication numérique.

5. Poteau de support (1) selon la revendication 1 ou 4, **caractérisé en ce que** le local technique est aussi doté d'un système de ventilation naturelle permettant de maintenir la température constante à l'intérieur du poteau (1) ; par ailleurs, malgré les ouvertures présentes, le système de ventilation empêche la pénétration de l'eau et de la neige à l'intérieur du poteau (1).

6. Poteau de support (1) selon l'une des revendications précédentes, **caractérisé en ce que** les différents modules (5, 7, 9) sont reliés entre eux par un joint.
